Europäisches Patentamt

European Patent Office

Office européen des brevets

(19)

(11) EP 0 843 448 A1

(12) DEMANDE DE BREVET EUROPEEN

(43) Date de publication:
20.05.1998 Bulletin 1998/21

(51) Int Cl.$^6$: H04L 27/36

(21) Numéro de dépôt: 97402658.5

(22) Date de dépôt: 06.11.1997

(84) Etats contractants désignés:
AT BE CH DE DK ES FI FR GB GR IE IT LI LU MC NL PT SE

(30) Priorité: 14.11.1996 FR 9613868

(71) Demandeur: ALCATEL ALSTHOM COMPAGNIE GENERALE D'ELECTRICITE
75008 Paris (FR)

(72) Inventeurs:
• Marchesani, Rossano
  66100 Chieti (IT)
• Canonici, Jean-Xavier
  92200 Neuilly-sur-Seine (FR)

(74) Mandataire: Scheer, Luc
ALCATEL ALSTHOM,
Département de Propriété Industrielle,
30, avenue Kléber
75116 Paris (FR)

(54) **Estimation et correction de défauts de modulation**

(57) L'invention concerne notamment un estimateur d'un défaut d'un modulateur en quadrature comprenant deux mélangeurs auxquels sont appliqués deux signaux porteurs ainsi qu'à chacun des mélangeurs un signal modulant. Les signaux de sortie des mélangeurs sont appliqués à un sommateur pour constituer un signal modulé.

Selon l'invention, l'estimateur comporte :

- des moyens (71) de détection d'un premier signal représentatif de la puissance instantanée du signal modulé ;

- des moyens (74) de génération d'un second signal représentatif d'une enveloppe de référence obtenue à partir des signaux modulants (X, Y) ;

- des moyens (77) de correction de l'amplitude d'un desdits signaux en fonction de la différence d'amplitude moyenne observée entre ce signal d'amplitude corrigée et l'autre signal ;

- des moyens (79) de traitement fournissant, à partir de la différence d'amplitude observée (e) entre ce signal d'amplitude corrigée et l'autre signal, au moins un signal (E1) relatif au défaut.

FIG. 7

## Description

Le domaine de l'invention est celui des émetteurs de signaux à $2^n$ états de phase, obtenus par modulation par déplacement de phase (MDP-M, modulation de phase à M états) ou par modulation d'amplitude et de phase (MDAP-M, modulation d'amplitude et de phase à M états).

L'invention concerne plus précisément un estimateur d'un défaut de fonctionnement d'un modulateur en quadrature comprenant deux mélangeurs auxquels sont appliqués deux signaux porteurs ainsi qu'à chacun de ces mélangeurs un signal modulant, les signaux de sortie des mélangeurs étant appliqués à un sommateur pour constituer un signal modulé. Les signaux porteurs sont en principe en quadrature de phase et sont soit à une fréquence intermédiaire, soit à une fréquence porteuse.

L'invention a notamment pour objet un estimateur pouvant être utilisé dans une boucle d'asservissement pour modifier l'écart de phase entre les signaux porteurs (estimateur de quadrature) et/ou annuler les résidus de signaux porteurs non modulés dans le signal modulé (estimateur de porteuse résiduelle) et/ou modifier l'amplitude des signaux de sortie des mélangeurs (estimateur de balance destiné à estimer l'amplitude relative des deux voies). L'invention trouve un intérêt tout particulier pour le contrôle d'un étage de modulation fonctionnant dans une large bande de fréquences et pour des modulations d'ordre élevé (n grand).

Dans le cas d'une modulation à $2^n$ états de phase, si l'on veut réaliser une représentation de type coordonnées cartésiennes dans un espace de signaux, on peut placer les états de phase de façon équi-répartie par rapport à des axes correspondant à des signaux porteurs orthogonaux X et Y. On obtient alors une constellation qui correspond à la représentation vectorielle des états de signaux porteurs dont les projections sur les axes X et Y donnent les coordonnées de-l'extrémité du vecteur-représenté.

Il peut cependant arriver qu'une constellation soit décentrée et/ou déphasée par rapport à ces axes, ce qui entraîne une dégradation des performances de l'émetteur.

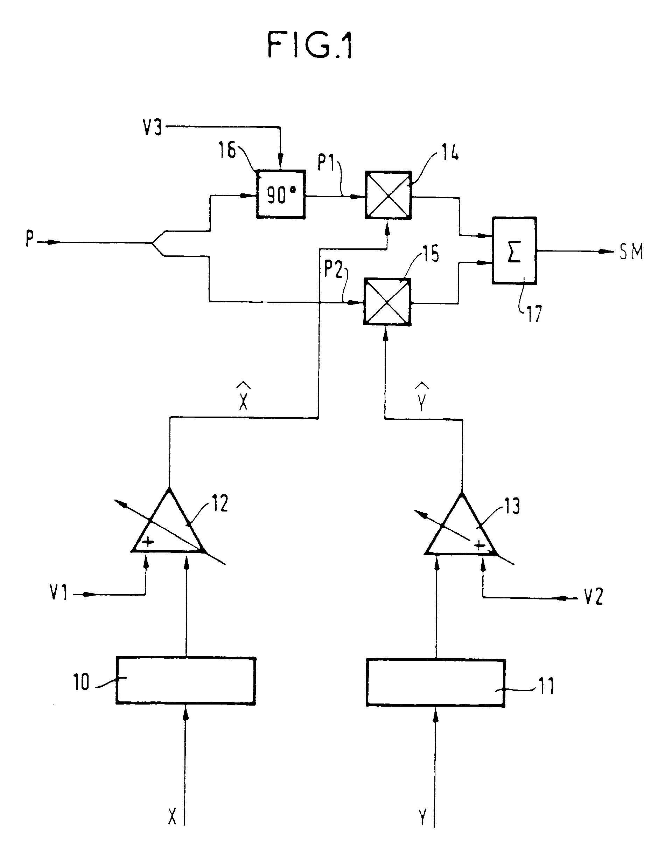

La figure 1 représente un étage de modulation d'un émetteur de signaux à $2^n$ états de phase de l'art connu. Un étage de ce type est décrit dans le brevet français n°2.641.923.

Deux signaux modulants X et Y à transmettre à l'attention d'un récepteur sont appliqués à des convertisseurs numériques/analogiques 10 et il dont les sorties sont reliées respectivement à des entrées d'amplificateurs 12 et 13 à gain variable qui reçoivent sur une autre entrée deux tensions de réglage V1 et V2. Les signaux de sortie $\hat{X}$, $\hat{Y}$ des amplificateurs 12 et 13 constituent des signaux qui sont appliqués à deux mélangeurs 14 et 15 recevant par ailleurs sur leur autre accès chacun un signal porteur P1, P2, ces signaux porteurs étant en principe déphasés d'un angle de 90° l'un par rapport à l'autre. Cet angle de déphasage peut être ajusté à l'aide d'une tension V3 appliquée à un déphaseur.de 90° réglable référencé 16 recevant, comme le mélangeur 15, un signal porteur P issu d'un oscillateur local. Les signaux de sortie des mélangeurs 14 et 15 sont appliqués à un sommateur 17 fournissant un signal modulé SM à transmettre à $2^n$ états de phase. Le signal SM peut être en fréquence intermédiaire ou en hyperfréquences.

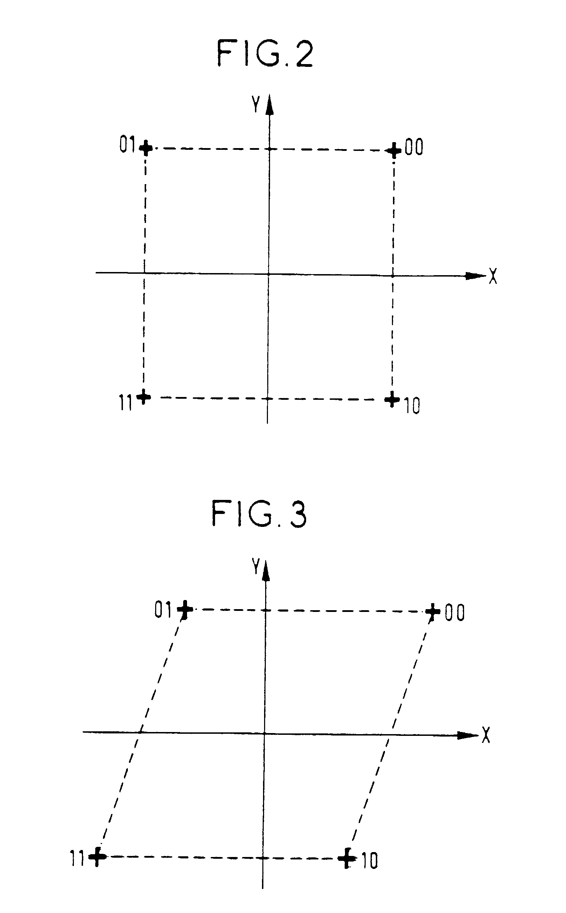

La constellation du signal SM est représentée à la figure 2. Cette constellation correspond à celle d'un signal de type MDP-4 (Modulation de phase à 4 états de phase ou QPSK en anglais, Quaternary Phase Shift Keying) idéal.

Les croix, correspondant à des symboles transmis, représentent les différents états de phase du signal SM. La constellation est ici centrée, c'est à dire que les projections des vecteurs, correspondant aux différents états, sur les axes X et Y sont, deux à deux, de même amplitude et en opposition de phase.

Cependant, il arrive que la quadrature des signaux porteurs appliqués aux mélangeurs de la figure 1 ne soit pas tout à fait respectée, ces signaux porteurs étant alors déphasés de 90° $\pm \alpha$, où $\alpha$ correspond à un décalage angulaire indésirable. Si un tel déphasage angulaire existe, la constellation du signal SM est par exemple celle représentée à la figure 3.

Un défaut de quadrature est dû à soit un retard entre les chemins d'accès des signaux porteurs, soit entre les deux signaux porteurs modulés. Ce défaut de quadrature dépend de la fréquence du signal porteur. Le défaut de quadrature entraîne une dissymétrie de la constellation qui dégrade les qualités de la liaison de transmission entre l'émetteur équipé de l'étage de modulation et un récepteur recevant le signal SM. Pour-compenser ce défaut de quadrature, on agit sur la tension V3.

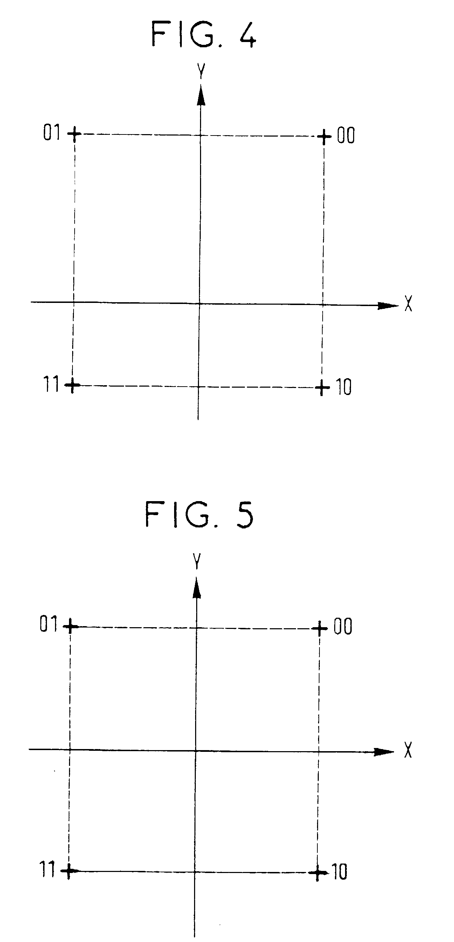

La figure 4 représente une constellation MDP-4 d'un signal SM issu d'un étage de modulation présentant un défaut de symétrie de ses mélangeurs. Un défaut de symétrie des mélangeurs se traduit par un résidu de signaux porteurs non modulés dans le signal modulé et l'énergie est inégalement répartie. Pour remédier à cet inconvénient, on agit sur les tensions V1 et V2.

Un estimateur de résidu de signaux porteurs dans le signal modulé a pour fonction de fournir un signal permettant d'annuler la présence de ces signaux porteurs dans le signal modulé. Classiquement, dans le cas où les signaux porteurs sont des signaux hyperfréquences (modulation directe), la coopération de l'estimateur et du modulateur permet d'annuler la porteuse dans le signal transmis. Il s'agit alors d'un dispositif d'annulation de porteuse.

De manière générale, un résidu de signaux porteurs dans le signal modulé se traduit par une résurgence au milieu du spectre modulé d'une raie à la fréquence des signaux porteurs. Cette résurgence peut être provoquée par :

- un défaut d'équilibrage des mélangeurs, laissant alors passer une fraction des signaux porteurs pour un signal modulant de 0 Volt ;
- un défaut d'isolation des sorties des mélangeurs par rapport à l'oscillateur local.

La demande de brevet précitée décrit un estimateur permettant de conserver à la constellation du signal SM une allure telle que représentée à la figure 2.

L'estimateur décrit dans cette demande de brevet est de type numérique et prend en compte les signaux modulants X et Y, ainsi que le signal modulé SM. Le signal modulé SM subit une détection d'amplitude et est numérisé pour être comparé aux signaux X et Y. Un microprocesseur pilote des compteurs-décompteurs suivis de convertisseurs numériques-analogiques dont les sorties constituent les tensions de commande V1 à V3.

Cependant, cet estimateur présente plusieurs inconvénients :

- comme le traitement est effectué en numérique, on est limité par la fréquence maximale de fonctionnement du microprocesseur. La correction de la constellation prend donc un certain temps ;
- la quantification du signal modulé SM, réalisée par le convertisseur analogique-numérique, entraîne un manque de précision et il n'est pas possible d'effectuer un réglage très fin, par exemple de la quadrature ;
- le coût des convertisseurs analogiques-numériques et numériques-analogiques est croissant avec le débit numérique ;
- sa réalisation est complexe ;
- il est prévu pour fonctionner à un débit numérique donné, à une fréquence porteuse donnée et pour un type de générateur donné.

On connaît par ailleurs, par la demande de brevet français n°2.729.261, un estimateur d'un défaut de fonctionnement d'un modulateur en quadrature comprenant deux mélangeurs auxquels sont appliqués deux signaux porteurs ainsi qu'à chacun de ces mélangeurs un signal modulant, les signaux de sortie des mélangeurs étant appliqués à un sommateur pour constituer un signal modulé. Cet estimateur comporte :

- des moyens de détection de la puissance instantanée du signal modulé ;
- des moyens de multiplication de la puissance instantanée détectée par l'un au moins des signaux modulants ;
- des moyens d'intégration du résultat de cette multiplication, les moyens d'intégration fournissant un signal indicatif du défaut de fonctionnement du modulateur.

Lorsque le défaut de fonctionnement du modulateur est un résidu des signaux porteurs dans le signal modulé, les moyens de multiplication multiplient la puissance instantanée par chacun des signaux modulants pour fournir, après intégration, deux signaux représentatifs du résidu de signaux porteurs dans le signal modulé.

Lorsque le défaut de fonctionnement du modulateur est un défaut de quadrature entre les signaux issus des mélangeurs, les moyens de multiplication multiplient la puissance instantanée détectée par les signaux modulants pour fournir, après intégration, un signal représentatif de l'écart de phase entre les signaux issus des mélangeurs.

Un des problèmes posés par les estimateurs décrits dans cette demande de brevet est que leurs temps de convergence sont importants pour obtenir une bonne précision des estimations. Autrement dit, les durées d'intégration sont importantes.

Il n'est pas non plus prévu de réaliser une estimation du défaut de balance du modulateur. Ainsi, une constellation telle que celle représentée à la figure 5, qui est une constellation d'un signal modulé en MDP-4 issu d'un modulateur présentant un défaut de balance (différence d'amplitude entre les voies X et Y), ne peut être corrigée.

La présente invention a notamment pour objectif de remédier à ces inconvénients.

Plus précisément, un des objectifs de l'invention est de fournir un estimateur rapide d'un défaut de fonctionnement d'un modulateur en quadrature, ce défaut de-fonctionnement étant soit un résidu de signaux porteurs dans le signal modulé, soit un défaut de quadrature entre les signaux issus des mélangeurs, soit un défaut de balance. L'estimateur doit notamment pouvoir être utilisé dans un modulateur en quadrature fonctionnant dans une large bande de fréquences.

Cet objectif, ainsi que d'autres qui apparaîtront par la suite, est atteint grâce à un estimateur d'un défaut d'un modulateur en quadrature comprenant deux mélangeurs auxquels sont appliqués deux signaux porteurs ainsi qu'à chacun des mélangeurs un signal modulant, les signaux de sortie des mélangeurs étant appliqués à un sommateur pour constituer un signal modulé, cet estimateur comportant :

- des moyens de détection d'un premier signal représentatif de la puissance instantanée du signal modulé ;
- des moyens de génération d'un second signal représentatif d'une enveloppe de référence obtenue à partir des signaux modulants ;

EP 0 843 448 A1

- des moyens de correction de l'amplitude d'un des signaux en fonction de la différence d'amplitude moyenne observée entre ce signal d'amplitude corrigée et l'autre signal ;
- des moyens de traitement fournissant, à partir de la différence d'amplitude observée entre ce signal d'amplitude corrigée et l'autre signal, au moins un signal relatif au défaut.

L'invention propose donc par exemple de corriger l'amplitude de l'enveloppe du signal modulé en fonction des signaux modulants, ceci afin de s'affranchir d'une disparité de distribution des valeurs de ces signaux modulants. Il est ainsi possible de réduire de manière considérable la durée d'analyse du premier signal et de corriger en un temps très court le ou les défauts du modulateur en quadrature.

Lorsque le défaut du modulateur est un défaut de quadrature, les moyens de traitement comprennent des moyens de multiplication de la différence d'amplitude observée par les signes des signaux modulants, ces moyens de multiplication fournissant, après intégration, un signal d'erreur de quadrature.

Lorsque le défaut du modulateur est un résidu de signaux porteurs dans le signal modulé, les moyens de traitement comprennent deux multiplieurs recevant chacun le signe d'un des signaux modulants, les signaux de sortie des multiplieurs constituant, après intégration, deux signaux représentatifs chacun du résidu d'un des signaux porteurs dans le signal de sortie d'un des mélangeurs.

Lorsque le défaut du modulateur est un défaut de balance, la différence d'amplitude observée est appliquée à deux multiplieurs, chacun des multiplieurs recevant également un des signaux modulants, -les signaux de sortie des multiplieurs étant appliqués à des circuits de valeur absolue avant d'être soustraits l'un de l'autre puis intégrés, le signal intégré constituant un signal d'erreur de balance.

L'invention concerne également un modulateur en quadrature coopérant avec un tel estimateur.

D'autres caractéristiques et avantages de l'invention apparaîtront à la lecture de la description suivante d'un mode de réalisation préférentiel, donné à titre illustratif et non limitatif, et des dessins annexés, dans lesquels :

- la figure 1 représente un étage de modulation d'un émetteur de signaux à $2^n$ états de phase de l'art connu ;
- la figure 2 représente un constellation idéale d'un signal de type MDP-4 ;
- la figure 3 représente une constellation d'un signal modulé en MDP-4 où les signaux porteurs ne sont pas en quadrature de phase ;
- la figure 4 représente une constellation d'un signal modulé en MDP-4 où le signal modulé comporte un résidu de signaux porteurs ;
- la figure 5 représente une constellation d'un signal modulé en MDP-4 issu d'un modulateur présentant un défaut de balance ;
- la figure 6 représente un modulateur en quadrature pouvant être piloté par un estimateur selon l'invention ;
- la figure 7 représente un mode de réalisation d'un estimateur d'un défaut de quadrature selon l'invention ;
- la figure 8 représente un mode de réalisation d'un estimateur de porteuse résiduelle de selon l'invention ;
- la figure 9 représente un mode de réalisation d'un estimateur d'un défaut de balance selon l'invention ;
- la figure 10 représente une variante de réalisation d'un estimateur d'un défaut de balance selon l'invention ;
- la figure il montre les précisions des estimations de défaut de balance, de défaut de quadrature et de résidu de porteuse en fonction du temps.

Les figures 1 à 5 ont été décrites précédemment en référence à l'état de la technique. Dans les différentes figures, les mêmes éléments portent les mêmes références.

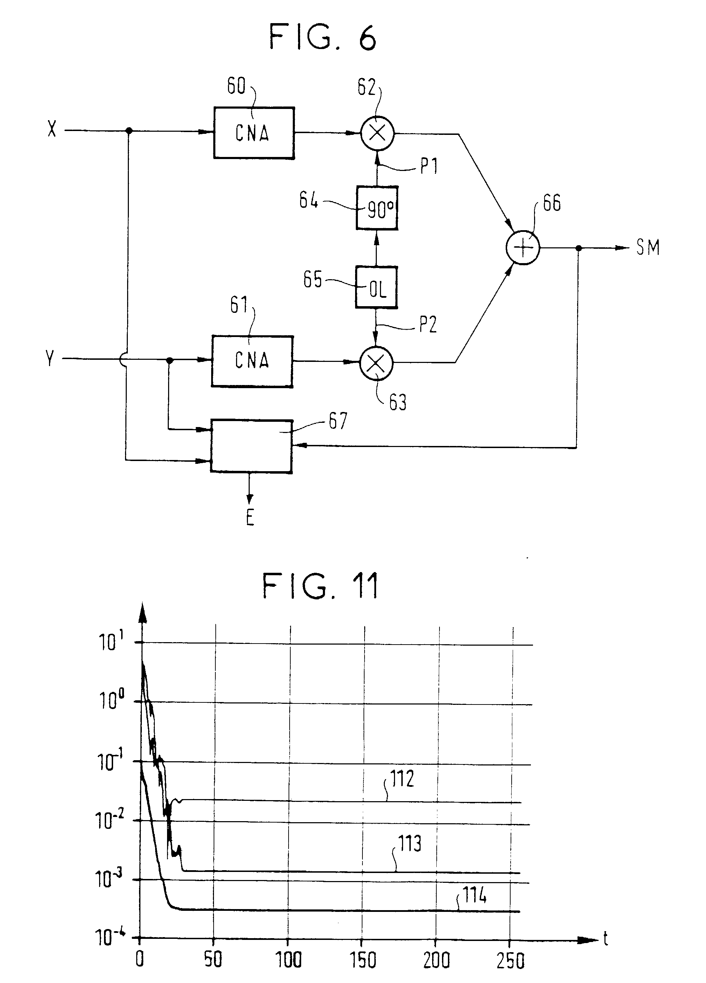

La figure 6 représente un modulateur en quadrature pouvant être piloté par un estimateur selon l'invention.

Les signaux modulants X et Y sont classiquement appliqués à un étage de modulation comprenant des convertisseurs numériques-analogiques (CNA) 60, 61 dont les signaux de sortie sont appliqués à des mélangeurs 62, 63 recevant des signaux porteurs P1 et P2, idéalement en quadrature de phase. Les signaux porteurs P1 et P2 sont obtenus en déphasant de 90° (déphaseur 64) le signal de sortie d'un oscillateur local 65. Les signaux de sortie des mélangeurs 62, 63 sont additionnés dans un sommateur 66 pour constituer un signal modulé SM en fréquence intermédiaire ou en hyperfréquences.

Le modulateur en quadrature coopère avec un bloc d'estimation 67 recevant les signaux modulants X et Y, ainsi que le signal modulé SM. Comme il sera vu par la suite, le bloc d'estimation 67 peut notamment comprendre un estimateur d'un défaut de quadrature et/ou un estimateur de porteuse résiduelle et/ou un estimateur de défaut de balance.

Pour des raisons de simplification, on peut poser qu'un seul estimateur est compris dans le bloc d'estimation 67, cet estimateur fournissant un signal E relatif au défaut du modulateur. Ce signal E est habituellement appliqué à un des organes du modulateur en vue de corriger le défaut concerné.

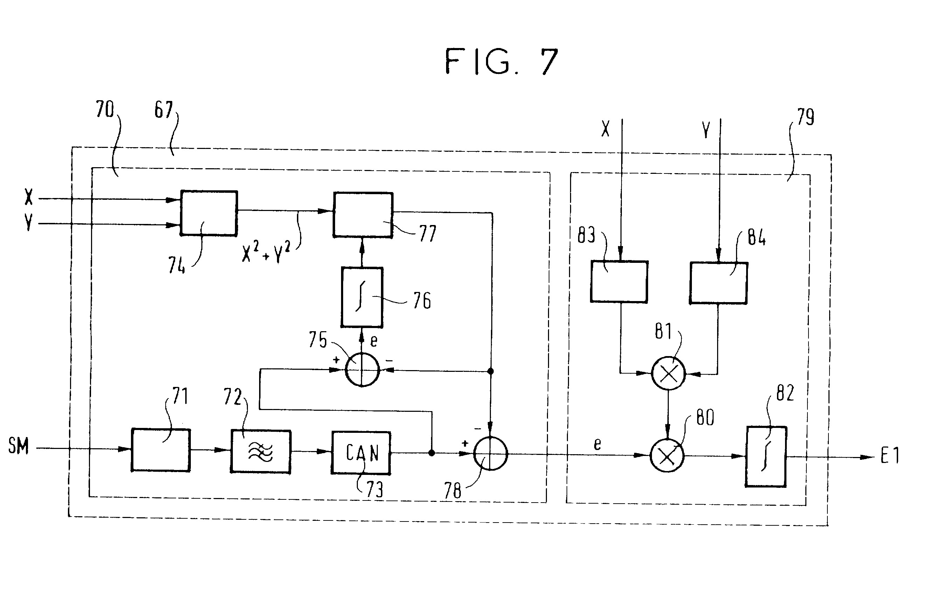

Dans un premier temps, on va considérer que l'estimateur compris dans le bloc 67 est un estimateur d'un défaut de quadrature. La figure 7 représente un mode de réalisation d'un tel estimateur.

4

L'estimateur de défaut de quadrature selon l'invention comporte, de même que les estimateurs de résidu de porteuse et de défaut de balance qui seront décrits par la suite, des moyens généralement référencés par 70, ici réalisés sous forme numérique.

Les moyens 70 comportent :

- des moyens 71 de détection d'un premier signal représentatif de la puissance instantanée du signal modulé SM ;
- un filtre passe-bas 72 filtrant le signal issu des moyens 71 ;
- un convertisseur analogique-numérique 73 fournissant un signal numérique filtré également représentatif de la puissance instantanée du signal modulé SM ;
- des moyens 74 de génération d'un second signal représentatif d'une enveloppe de référence obtenue à partir des signaux modulants X et Y ;
- des moyens 77 de correction de l'amplitude d'un de ces premier et second signaux (ici corrigeant l'amplitude du second signal) en fonction de la différence d'amplitude moyenne (intégrateur 76) observée par un soustracteur 75 entre ce signal d'amplitude corrigée (issu des moyens de correction 77) et l'autre signal (issu du CAN 73).

Le second signal a par exemple une amplitude égale à $X^2+Y^2$.

Les moyens 70 fournissent à des moyens de traitement 79 un signal d'erreur e (identique à celui appliqué à l'entrée de l'intégrateur 76) afin que ces derniers génèrent un signal E1 relatif au défaut de quadrature à estimer.

Les moyens 74 fournissent par exemple l'enveloppe $\sqrt{X^2+Y^2}$ ou alors l'enveloppe au carré $X^2+Y^2$. De même, les moyens 71 fournissent un signal correspondant, l'enveloppe du signal modulé SM ou alors l'enveloppe au carré respectivement. L'essentiel est que les premier et second signaux représentent respectivement une puissance instantanée du signal modulé SM et une enveloppe de référence obtenue à partir des signaux modulants.

La boucle constituée par le soustracteur 75, l'intégrateur 76 et les moyens 77 de correction d'amplitude a pour fonction d'assurer que l'amplitude du signal issu des moyens 77 soit égale à celle du signal issu du CAN 73, de sorte que le signal d'erreur e issu des moyens 70 soit nul. Ainsi, l'enveloppe du signal à transmettre n'est pas conditionnée par la distribution statistique des signaux X et Y et une compensation des éventuelles différences d'amplitude est assurée.

Cette boucle n'est en réalité nécessaire que lorsqu'on s'attache à compenser dans le temps les variations de caractéristiques des composants (vieillissement) et/ou que l'on ne connaît pas les atténuations apportées par les circuits du modulateur et des moyens référencés 71 à 74. C'est pourquoi, pour des raisons de clarté, deux soustracteurs 75 et 78 ont été représentés, la réalisation pratique ne nécessitant qu'un seul soustracteur.

En l'absence d'une telle boucle, seuls les moyens 78 soustrayant le second signal du premier signal sont nécessaires, ces moyens 78 fournissant alors un signal e, appelé signal différence, directement aux moyens de traitement 79.

Les moyens 77 de correction d'amplitude peuvent par exemple être réalisés sous la forme d'un amplificateur à gain variable piloté par le signal issu de l'intégrateur 76.

Dans l'estimateur d'un défaut de quadrature de la figure 7, les moyens de traitement 79 sont constitués par des moyens de multiplication 80, 81 fournissant à un intégrateur 82 le produit entre le signal d'erreur e et les signes des signaux modulants X et Y. A cet effet, les signaux modulants X et Y sont appliqués à des extracteurs de signe 83, 84 fournissant sur leurs sorties les signes de ces signaux modulants X, Y. L'intégrateur 82 est en fait un accumulateur d'un nombre μ d'estimations et fournit le signal E1 représentatif de l'erreur de quadrature.

La correction d'amplitude peut indifféremment s'appliquer au premier signal (issu du CAN 73) ou au second signal (issu des moyens de génération 74).

Le signal d'erreur de quadrature E1 peut être appliqué au modulateur en quadrature comme indiqué dans la demande FR-2.729.261 précitée.

La justification mathématique de ce qui précède est donnée ci-après pour le cas de calculs de carrés d'enveloppes. On suppose que les signaux modulants X et Y sont des variables aléatoires indépendantes (X = f1(t) et Y = f2(t)).

En présence d'un défaut de quadrature α, on a en sortie du CAN 73 :

$$P^2 = (X^*\cos(\alpha))^2 + (X^*\sin(\alpha) + Y)^2$$

$$= X^2 + Y^2 + 2^*X^*Y^*\sin(\alpha) \tag{1}$$

avec P l'enveloppe.

La multiplication en 80 de cette expression par sg(x)*sg(y), avec sg le signe, et le calcul de l'espérance mathématique du signal résultant, on obtient :

$$E[X^2*sg(X)]*E[sg(Y)] + E[Y^2*sg(Y)]*E[sg(X)] + E[2*X*Y*sin(\alpha)*sg(X)*sg(Y)] \qquad (2)$$

La présence des premier et deuxième termes de cette expression est due à la présence de $X^2 + Y^2$ dans la relation (1). Ces termes ne s'annulent qu'après un temps important, en théorie infini. En effet, pour une durée d'analyse importante du signal $P^2$, $E[sg(Y)]$ et $E[sg(X)]$ convergent vers zéro. Seul le troisième terme de l'expression subsiste donc. L'expression (2) s'écrit alors :

$$2*sin(\alpha)*E[|X|]*E[|Y|]$$

puisque $X*sg(X) = |X|$ et $Y*sg(Y) = |Y|$. La convergence de cette expression est plus rapide car on n'a plus à attendre la convergence vers zéro des termes en $X^2$ et $Y^2$.

La fonction réalisée dans l'invention consiste donc à supprimer la valeur $X^2 + Y^2$ dans l'expression de $P^2$ afin de permettre une estimation très rapide de l'erreur de quadrature $\alpha$. Ce principe est le même pour les erreurs de balance et de résidus de porteuse, comme il sera vu par la suite.

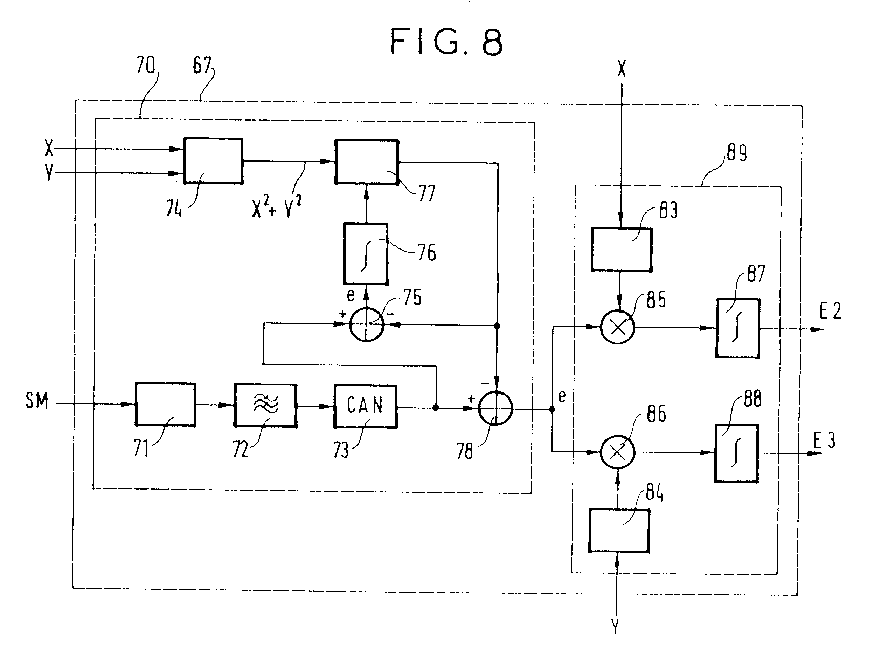

Dans un deuxième temps, on va considérer que l'estimateur compris dans le bloc 67 de la figure 6 est un estimateur de signaux porteurs résiduels. La figure 8 représente un mode de réalisation d'un tel estimateur.

Les moyens 70 de la figure 8 sont identiques à ceux de la figure 7. Dans le cas où l'on souhaite estimer une erreur de quadrature et un résidu de signaux porteurs, ces moyens 70 peuvent donc être partagés entre les estimateurs.

Le signal d'erreur e est ici appliquée à des moyens de traitement 89 comprenant deux multiplieurs 85, 86 recevant chacun le signe d'un des signaux modulants X et Y, par l'intermédiaire des extracteurs de signe 83 et 84. Les signaux de sortie des multiplieurs 85 et 86 constituent, après accumulation d'un nombre µ d'estimations dans des accumulateurs 87, 88, deux signaux E2, E3 représentatifs chacun du résidu d'un des signaux porteurs dans un des signaux de sortie d'un des mélangeurs 62, 63 (Fig.6) du modulateur en quadrature.

A des fins de correction, les signaux E2 et E3 peuvent être appliqués aux mélangeurs 62 et 63 (Fig.6) pour corriger les offsets introduits par ces mélangeurs. Il peut par exemple s'agir d'entrées de réglage d'offsets.

La justification mathématique de ce qui précède est donnée ci-après, également pour le cas de calculs de carrés d'enveloppes.

En présence d'un résidu de porteuse $\chi$, on a en sortie du CAN 73 :

$$P^2 = (X+\chi_x)^2 + (Y+\chi_y)^2 = X^2 + Y^2 + 2*X*\chi_x + 2*Y*\chi_y + \chi_x{}^2 + \chi_y{}^2 \qquad (3)$$

avec $\chi_x$ le résidu de porteuse en sortie du mélangeur de la voie X (mélangeur 62 de la figure 6) et $\chi_y$ le résidu de porteuse en sortie du mélangeur de la voie Y (mélangeur 63).

En multipliant cette expression par sg(X) et par sg(Y) et en calculant l'espérance mathématique, on obtient :

$$E[X^2*sg(X)] + E[Y^2]*E[sg(X)] + 2*\chi_x*E[X*sg(X)] + 2*\chi_y*E[Y]*E[sg(X)]$$

$$+ \chi_{x^2}*E[sg(X)] + \chi_{y^2}*E[sg(X)]$$

sur une voie et

$$E[X^2]*E[sg(Y)] + E[Y^2*sg(Y)] + 2*\chi_x*E[X]*E[sg(Y)] + 2*\chi_y*E[Y*sg(Y)] + \chi_{x^2}*E[sg(Y)] + \chi_{y^2}*E[sg(Y)]$$

sur l'autre voie.

Si on retire les termes qui s'annulent au bout d'un temps important (ceux issus de la présence de $X^2 + Y^2$ dans l'expression (3)), on obtient :

$2*\chi_x*E[|X|]$ sur une voie et
$2*\chi_y*E[|Y|]$ sur l'autre voie.

On constate donc qu'en supprimant $X^2 + Y^2$ dans l'expression (3), à l'aide des moyens 74 à 78, on obtient une estimation des résidus de porteuse $\chi_x$ et $\chi_y$ bien plus rapidement que dans l'état de la technique.

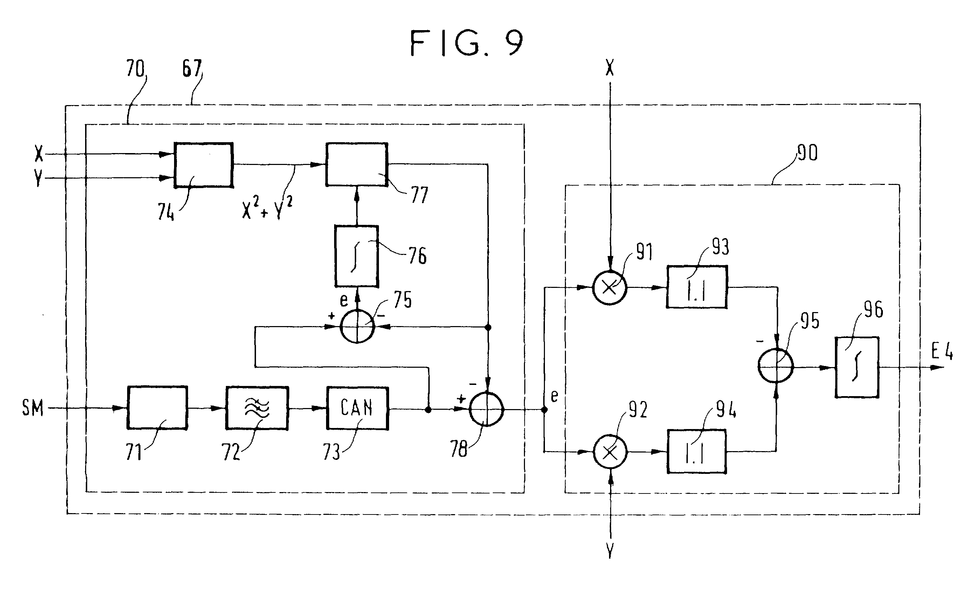

Dans un troisième temps, on va considérer que l'estimateur compris dans le bloc 67 de la figure 6 est un estimateur d'erreur de balance. La figure 9 représente un mode de réalisation d'un tel estimateur.

Les moyens 70 de la figure 9 sont également identiques à ceux de la figure 7, mis à part que le CAN 73 fonctionne en suréchantillonnage. Il est en effet nécessaire, afin d'estimer une erreur de balance, de suréchantillonner, par exemple à 8*Ts (avec Ts le temps symbole), l'enveloppe du signal SM afin de disposer de plus d'un échantillon par quadrant du plan complexe.

Le signal d'erreur e est ici appliquée à des moyens de traitement 90 comprenant deux multiplieurs 91, 92 recevant ce signal e, chacun des multiplieurs 91, 92 recevant également un des signaux modulants X, Y. Les signaux de sortie des multiplieurs 91, 92 sont appliqués à des circuits de valeur absolue 93, 94, les signaux de sortie de ces circuits 93, 94 étant appliqués à un soustracteur 95. Le signal différence résultant est appliqué à un accumulateur 96 d'un nombre $\alpha$ d'estimations. La sortie de l'accumulateur 96 constitue un signal d'erreur de balance E4.

En vue d'une correction de la balance du modulateur en quadrature, le signal E4 peut être appliqué à un multiplieur fournissant à un sommateur un signal X*E4 (ou Y*E4), le sommateur étant inséré sur la voie correspondante (X ou Y) pour fournir au modulateur un signal somme égal à X*(1+E4) ou Y*(1+E4). Ce signal somme remplace alors le signal modulant X ou Y respectivement.

La justification mathématique de ce qui précède est donnée ci-après, également pour le cas de calculs de carrés d'enveloppes.

En présence d'un défaut de balance $\beta$, on a en sortie du CAN 73 :

$$P^2 = X^2 + ((1+\beta)Y)^2 = X^2 + Y^2 + 2*\beta*Y + \beta^2*Y^2 \tag{4}$$

En multipliant cette expression par IXI et par IYI, on obtient :

$$X^2*IXI + Y^2*IXI + (2*\beta*Y^2 + \beta^2*Y^2)*IXI$$

sur une voie et

$$X^2*IYI + Y^2*IYI + (2*\beta*Y^2*IYI) + \beta^2*Y^2*IYI$$

sur l'autre voie.

Si on prend la différence entre ces expressions et en considérant que :

$$E[X^2]*E[IYI] = E[Y^2]*E[IXI]$$

$$E[X^2*IXI] = E[Y^2*IYI]$$

$$E[Y]*E[IXI] = E[Y*IYI] = 0$$

on obtient :

$$2*(\beta+\beta^2)*(E[Y^2]*E[IXI] - E[Y^2*IYI])$$

Là aussi, la suppression du terme $X^2 + Y^2$ dans l'expression (4) permet d'estimer l'erreur de balance $\beta$ bien plus rapidement que dans l'état de la technique.

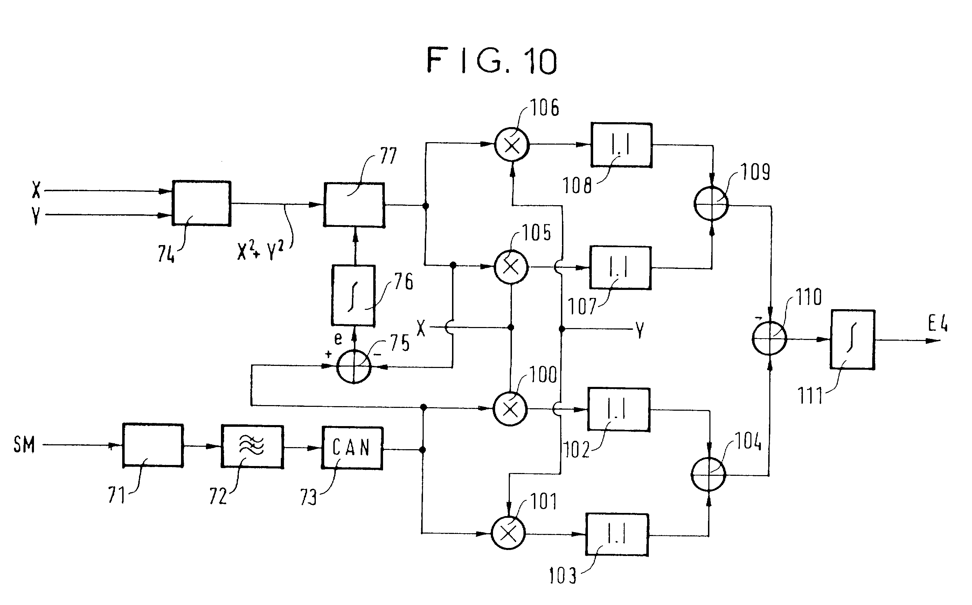

La figure 10 représente une variante de réalisation d'un estimateur d'un défaut de balance selon l'invention.

Dans cette variante de réalisation, équivalente au mode de réalisation de la figure 9, le premier signal représentatif de la puissance instantanée du signal modulé SM est appliqué à deux multiplieurs 100 et 101 recevant par ailleurs les signaux modulants X et Y. Les signaux de sortie de ces multiplieurs 110, 101 sont appliqués à des circuits de valeur absolue 102, 103 avant sommation dans un additionneur 104. Parallèlement, le second signal représentatif d'une enveloppe de référence (dont l'amplitude a été corrigée comme précédemment indiqué pour se soustraire à une distribution statistique non homogène des données à transmettre) est appliquée à deux autres multiplieurs 105, 106 auxquels sont également appliqués les signaux modulants X et Y. Après passage des produits résultants dans des circuits de valeur absolue 107, 108 et sommation dans un additionneur 109 des valeurs absolues obtenues, le signal de sortie de l'additionneur 109 est soustrait, dans un soustracteur 110, de celui issu de l'additionneur 104, afin d'obtenir le même signal que celui disponible en sortie du soustracteur 95 de la figure 9. Après intégration 111, on retrouve l'estimation E4 de défaut de balance.

Cette variante de réalisation peut bien entendu également être appliquée aux estimateurs des figures 7 et 8.

La figure il montre les précisions des estimations de défaut de balance, de défaut de quadrature et de résidu de porteuse en fonction du temps t exprimé en millisecondes. La caractéristique 112 correspond à la précision de l'erreur de balance, exprimée en %, la caractéristique 113 à l'erreur de quadrature et la caractéristique 114 au résidu de signaux porteurs.

On constate que ces trois défauts sont parfaitement estimés, et donc corrigés, en une durée de l'ordre de 30 ms (temps de convergence) pour 500 Ts, avec Ts le temps symbole. Les valeurs de $\mu$ (inversement proportionnelles à Ts) sont toutes intégrées avec un paramètre de gain de la boucle de 0,01 et les CAN 73 ont une résolution de il bits. La convergence est d'autant plus rapide et la précision meilleure que la valeur de $\mu$ et la résolution des CAN 73 sont importantes.

L'invention s'applique préférentiellement à une réalisation sous forme numérique, par exemple intégrée dans un ASIC, mais une réalisation sous forme analogique est également possible.

Les estimateurs décrits précédemment sont plus particulièrement destinés à être associés à un étage de modulation fonctionnant à un débit numérique et à une fréquence de signal porteur variables. Bien entendu, leur intérêt est également important dans le cas d'un modulateur fonctionnant à fréquence fixe, pour compenser des variations de caractéristiques du modulateur dues par exemple à des variations de température ou au vieillissement.

L'invention s'applique notamment aux modulateurs utilisés dans les transmissions par faisceaux hertziens ou par satellites.

## Revendications

1. Estimateur (67) d'un défaut d'un modulateur en quadrature comprenant deux mélangeurs (62, 63) auxquels sont appliqués deux signaux porteurs (P1, P2) ainsi qu'à chacun desdits mélangeurs (62, 63) un signal modulant (X, Y), les signaux de sortie desdits mélangeurs (62, 63) étant appliqués à un sommateur (66) pour constituer un signal modulé (SM),
   caractérisé en ce qu'il comporte :

   - des moyens (71) de détection d'un premier signal représentatif de la puissance instantanée dudit signal modulé (SM) ;
   - des moyens (74) de génération d'un second signal représentatif d'une enveloppe de référence obtenue à partir desdits signaux modulants (X, Y) ;
   - des moyens (77) de correction de l'amplitude d'un desdits signaux en fonction de la différence d'amplitude moyenne observée entre ce signal d'amplitude corrigée et l'autre signal ;
   - des moyens (79, 89, 90) de traitement fournissant, à partir de la différence d'amplitude observée (e) entre ce signal d'amplitude corrigée et l'autre signal, au moins un signal (E, E1, E2, E3, E4) relatif audit défaut.

2. Estimateur selon la revendication 1, caractérisé en ce que ledit signal dont l'amplitude est corrigée est ledit second signal.

3. Estimateur selon l'une des revendications 1 et 2, caractérisé en ce que ledit défaut dudit modulateur est un défaut de quadrature et en ce que lesdits moyens de traitement (79) comprennent des moyens de multiplication (80) de ladite différence d'amplitude observée (e) par les signes desdits signaux modulants (X, Y), lesdits moyens de multiplication (80) fournissant, après intégration (82), un signal d'erreur de quadrature (E1).

4. Estimateur selon l'une des revendications 1 et 2, caractérisé en ce que ledit défaut dudit modulateur est un résidu de signaux porteurs dans ledit signal modulé et en ce que lesdits moyens de traitement (89) comprennent deux multiplieurs (85, 86) recevant chacun le signe d'un desdits signaux modulants (X, Y), les signaux de sortie desdits multiplieurs (85, 86) constituant, après intégration (87, 88), deux signaux (E2, E3) représentatifs chacun du résidu d'un desdits signaux porteurs (P1, P2) dans le signal de sortie d'un desdits mélangeurs (62, 63).

5. Estimateur selon l'une des revendications 1 et 2, caractérisé en ce que ledit défaut dudit modulateur est un défaut de balance et en ce que ladite différence d'amplitude observée (e) est appliquée à deux multiplieurs (91, 92), chacun desdits multiplieurs (91, 92) recevant également un desdits signaux modulants (X, Y), les signaux de sortie desdits multiplieurs (91, 92) étant appliqués à des circuits de valeur absolue (93, 94) avant d'être soustraits (95) l'un de l'autre puis intégrés (96), le signal intégré constituant un signal d'erreur de balance (E4).

6. Modulateur en quadrature, caractérisé en ce qu'il coopère avec un estimateur (67) selon l'une des revendications 1 à 5.

7. Estimateur (67) d'un défaut d'un modulateur en quadrature comprenant deux mélangeurs (62, 63) auxquels sont appliqués deux signaux porteurs (P1, P2) ainsi qu'à chacun desdits mélangeurs (62, 63) un signal modulant (X, Y), les signaux de sortie desdits mélangeurs (62, 63) étant appliqués à un sommateur (66) pour constituer un signal modulé (SM),
caractérisé en ce qu'il comporte :

   - des moyens (71) de détection d'un premier signal représentatif de la puissance instantanée dudit signal modulé (SM) ;
   - des moyens (74) de génération d'un second signal représentatif d'une enveloppe de référence obtenue à partir desdits signaux modulants (X, Y) ;
   - des moyens (78) soustrayant ledit second signal dudit premier signal pour fournir un signal différence (e) ;
   - des moyens (79, 85, 90) de traitement fournissant, à partir dudit signal différence (e), au moins un signal (E, E1, E2, E3, E4) relatif audit défaut.

8. Estimateur selon la revendication 7, caractérisé en ce que ledit défaut dudit modulateur est un défaut de quadrature et en ce que lesdits moyens de traitement (79) comprennent des moyens de multiplication (80) dudit signal différence (e) par les signes desdits signaux modulants (X, Y), lesdits moyens de multiplication (80) fournissant, après intégration (82), un signal d'erreur de quadrature (E1).

9. Estimateur selon la revendication 7, caractérisé en ce que ledit défaut dudit modulateur est un résidu de signaux porteurs dans ledit signal modulé et en ce que lesdits moyens de traitement (89) comprennent deux multiplieurs (85, 86) recevant chacun le signe d'un desdits signaux modulants (X, Y), les signaux de sortie desdits multiplieurs (85, 86) constituant, après intégration (87, 88), deux signaux (E2, E3) représentatifs chacun du résidu d'un desdits signaux porteurs (P1, P2) dans le signal de sortie d'un desdits mélangeurs (62, 63).

10. Estimateur selon la revendication 7, caractérisé en ce que ledit défaut dudit modulateur est un défaut de balance et en ce que ledit signal différence (e) est appliqué à deux multiplieurs (91, 92), chacun desdits multiplieurs (91, 92) recevant également un desdits signaux modulants (X, Y), les signaux de sortie desdits multiplieurs (91, 92) étant appliqués à des circuits de valeur absolue (93, 94) avant d'être soustraits (95) l'un de l'autre puis intégrés (96), le signal intégré constituant un signal d'erreur de balance (E4).

# FIG.1

# FIG.2

# FIG.3

# FIG. 4

# FIG. 5

# FIG. 6

# FIG. 11

# FIG. 7

EP 0 843 448 A1

# FIG. 8

EP 0 843 448 A1

FIG. 9

# FIG. 10

EP 0 843 448 A1

# EP 0 843 448 A1

Office européen
des brevets

**RAPPORT DE RECHERCHE EUROPEENNE**

Numéro de la demande

EP 97 40 2658

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int.Cl.6) |
|---|---|---|---|
| X,D | EP 0 722 238 A (ALCATEL) 17 juillet 1996<br>* abrégé *<br>* figure 6 *<br>--- | 1-10 | H04L27/36 |
| A | US 5 351 016 A (DENT) 27 septembre 1994<br>* figure 3 *<br>* colonne 4, ligne 18 - ligne 58 *<br>* colonne 6, ligne 5 - ligne 23 *<br>--- | 1,7 | |
| A,D | EP 0 379 114 A (ALCATEL) 25 juillet 1990<br>* abrégé: figures 2,4 *<br>--- | 1,7 | |
| A | US 4 930 141 A (OHMAGARI) 29 mai 1990<br>* abrégé: figure 4 *<br>* colonne 2, ligne 51 - ligne 64 *<br>----- | 1,7 | |

**DOMAINES TECHNIQUES RECHERCHES (Int.Cl.6)**

H04L

Le présent rapport a été établi pour toutes les revendications

| Lieu de la recherche | Date d'achèvement de la recherche | Examinateur |
|---|---|---|
| LA HAYE | 19 février 1998 | Scriven, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)